# FASCICULE DE BREVET EUROPEEN

(11) **EP 2 600 587 B1**
(45) Date de publication et mention de la délivrance du brevet: **12.03.2014**
(21) Numéro de dépôt: 12192161.3
(22) Date de dépôt: 12.11.2012
(51) Int. Cl.: H04L 29/06

(54) **Procédé d'authentification d'un terminal à un réseau de télécommunications**
Authentifizierungsverfahren eines Endgeräts in einem Telekommunikationsnetz
Method for authenticating a terminal with a telecommunication network

(30) Priorité: 29.11.2011 FR 1160917
(43) Date de publication de la demande: 05.06.2013
(73) Titulaire: Oberthur Technologies, 92300 Levallois-Perret (FR)
(72) Inventeur: Jacquelin, Stéphane, 92000 Nanterre (FR)
(74) Mandataire: Cougard, Jean-Marie

(56) Documents cités:
- SHEN-HO LIN ET AL: "Authentication Schemes Based on the EAP-SIM Mechanism in GSM-WLAN Heterogeneous Mobile Networks", INC, IMS AND IDC, 2009 FIFTH INTERNATIONAL JOINT CONFERENCE ON, IEEE, PISCATAWAY, NJ, USA, 25 août 2009 (2009-08-25), pages 2089-2094, XP031565014, ISBN: 978-0-7695-3769-6
- WANG H ET AL: "Security mechanisms and security analysis: hotspot WLANs and inter-operator roaming", PROCEEDINGS / 2004 IEEE 59TH VEHICULAR TECHNOLOGY CONFERENCE, VTC 2004-SPRING : TOWARDS A GLOBAL WIRELESS WORLD ; 17 - 19 MAY 2004, MILAN, ITALY, IEEE OPERATIONS CENTER, PISCATAWAY, NJ, vol. 5, 17 mai 2004 (2004-05-17), pages 2492-2496, XP010766706, DOI: 10.1109/VETECS.2004.1391371 ISBN: 978-0-7803-8255-8

## Description

La présente invention se rapporte au domaine de l'authentification de terminaux auprès de réseaux de télécommunications et concerne plus particulièrement l'authentification d'un terminal équipé d'un microcircuit auprès d'un point d'accès d'un réseau de communications sans fil, de type WiFi par exemple.

L'invention s'applique notamment, mais de façon non exclusive, à l'authentification de terminaux équipés d'une carte SIM (pour « *Subscriber Identity Module* ») conforme au standard ISO 7816.

L'essor ces dernières années de la téléphonie mobile s'est traduit par une évolution importante des normes en la matière. Les principaux opérateurs ont ainsi progressivement migré de la norme GSM/CDMA (2G) vers l'UMTS/EvDo (3G), puis plus récemment, vers la norme LTE (pour « *Long Term Evolution* »). A terme, la technologie LTE deviendra une norme dite de 4^{ème} génération (dans sa version 10 appelée *LTE Advanced*).

En parallèle, les opérateurs déploient massivement des offres WiFi en installant sur différents territoires des points d'accès WiFi (appelés aussi bornes WiFi ou « hotspot » WiFi). Un point d'accès WiFi est un routeur donnant accès à un réseau sans fil WiFi, permettant ainsi à des utilisateurs de terminaux mobiles de se connecter à distance à d'autres terminaux d'un réseau informatique (Internet par exemple) afin d'échanger des signaux de donnée. Chaque point d'accès définit une zone d'accès WiFi dans laquelle un terminal mobile est susceptible de s'authentifier en vue d'accéder à un réseau de télécommunications tel qu'Internet par exemple.

De plus en plus de terminaux mobiles (Smartphones, ordinateurs portables, périphériques...) sont aujourd'hui capables de fonctionner selon les technologies 2G, 3G, LTE et WiFi afin de garantir à l'utilisateur la meilleure connexion possible à Internet. Afin d'optimiser l'expérience de l'utilisateur sur Internet, les opérateurs s'efforcent de rediriger les trafics de données des clients sur le type de réseau le plus adapté au besoin.

Une liaison de télécommunications de type WiFi offre de nombreux avantages aux utilisateurs. En particulier, elle permet l'échange de données à haut débit entre un terminal client et un réseau local sans fil sur un rayon de plusieurs dizaines de mètres. Cependant, la connexion à un point d'accès WiFi peut s'avérer fastidieuse pour un utilisateur lambda.

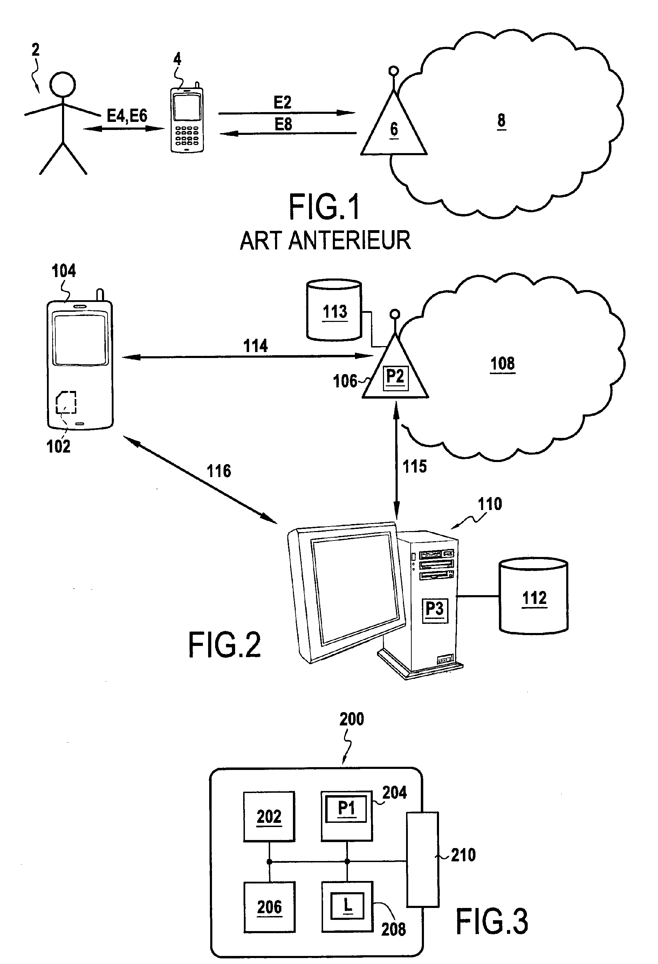

La méthode de connexion utilisée traditionnellement est à présent décrite en référence à la **figure 1**. Typiquement, le point d'accès WiFi 6 au réseau de télécommunications 8 envoie à intervalles réguliers des messages (*« beacon messages »*) dans sa zone environnante (étape E2). Sur réception d'un tel message, le terminal mobile 4 détecte la présence à proximité du point d'accès 6. A partir du message reçu, le terminal mobile 4 extrait l'identifiant du point d'accès 6 et avertit l'utilisateur 2 de la présence du point d'accès 6 en lui indiquant l'identifiant ainsi obtenu (étape E4).

De façon connue, c'est l'utilisateur 2 qui a la charge de sélectionner manuellement un point d'accès WiFi à partir de l'identifiant de point d'accès affiché par le terminal 4 (étape E6). L'utilisateur doit en particulier s'assurer que le point d'accès sélectionné appartient à un opérateur auprès duquel il a souscrit. Or, dans les zones urbaines à forte concentration, par exemple, il est fréquent qu'un terminal mobile détecte une multitude de points d'accès WiFi en même temps. Il n'est donc pas toujours aisé pour l'utilisateur de déterminer le ou les points d'accès auprès desquels il est habilité à s'authentifier et éventuellement à se connecter.

Une fois que l'utilisateur a sélectionné le point d'accès 6 sur son terminal 4, il doit en général s'authentifier à l'aide d'un identifiant (ou « login ») et d'un mot de passe (« password »). En pratique, l'envoi du login et du mot de passe au point d'accès 6 se fait via une requête http générée par le terminal 4 (étape E8). Dans certains cas, la saisie du login et du mot de passe se fait au moyen d'un portail captif mis en place par l'opérateur du réseau de télécommunications 8, ce portail forçant l'utilisateur 2 à s'authentifier à l'aide d'un navigateur (« browser ») afin de vérifier qu'il est effectivement autorisé à accéder au réseau 8.

Bien qu'il soit possible de personnaliser les terminaux mobiles actuels de façon à automatiser l'envoi du login et du mot de passe, cette technique présente des inconvénients majeurs, notamment en termes de sécurité. Il est en effet relativement aisé pour une personne ou une entité malveillante de récupérer le login et/ou le mot de passe lors de la saisie par l'utilisateur. De plus, il est possible pour plusieurs utilisateurs (ayant ou non souscrit auprès de l'opérateur) de partager le même compte d'utilisateur, ce qui va généralement à l'encontre de la volonté et l'intérêt de l'opérateur.

Le document intitulé « Authentication Schemes Based on the EAP-SIM Mechanism in GSM-WLAN Heterogenous Networks » (Shen-Ho et al) datant du 25 Août 2009 décrit un procédé d'authentification dans les réseaux GSM-WLAN à partir d'un mécanisme de type EAP-SIM.

Il existe donc aujourd'hui un besoin pour une solution permettant d'authentifier de manière simple, automatique et sécurisée un terminal auprès d'un point d'accès d'un réseau de télécommunications sans fil, de type WiFi par exemple. Un tel besoin existe en particulier pour les terminaux équipés de cartes SIM, et plus généralement, pour les terminaux équipés d'un microcircuit comportant l'identifiant unique d'un usager d'un réseau de télécommunication, de type sans fil par exemple.

### Obiet et résumé de l'invention

La présente, invention est définie dans le jeu de revendication qui suit.

A cet effet, la présente invention concerne un premier procédé d'authentification d'un terminal auprès d'un point d'accès à un premier réseau de télécommunications, le procédé étant mis en oeuvre par un microcircuit comportant l'identifiant unique d'un usager d'un deuxième réseau de télécommunications, le microcircuit pouvant coopérer avec le terminal, le procédé comprenant :
- la réception de l'identifiant d'un point d'accès au premier réseau de télécommunications ;
- la recherche de l'identifiant du point d'accès dans une liste d'identifiants de points d'accès mémorisée par le microcircuit ;
- en cas de succès de la recherche, une première étape de commande pour commander au terminal l'envoi d'informations obtenues à partir de l'identifiant du point d'accès et de l'identifiant unique ;
- en réponse audit envoi, la réception, via une liaison de communication, d'une variable d'authentification en provenance d'un serveur d'authentification ; et
- une deuxième étape de commande pour commander au terminal l'envoi d'une requête d'authentification à destination du point d'accès, la requête d'authentification comprenant un jeton d'authentification obtenu par le microcircuit à partir de la variable d'authentification.

Le deuxième réseau de télécommunications est par exemple un réseau de type sans fil.

Le jeton d'authentification peut être identique à la variable d'authentification. Alternativement, le jeton d'authentification peut être obtenu en effectuant un traitement à l'aide de la variable d'authentification. Par exemple, le microcircuit peut être configuré pour réaliser un algorithme permettant, à partir de la variable d'authentification, d'obtenir le jeton d'authentification. Cet algorithme peut être un algorithme de cryptographie, de type DES par exemple.

L'invention est avantageuse en ce qu'elle permet à un terminal équipé d'un microcircuit (sous la forme d'une carte à microcircuit par exemple) de s'authentifier de façon automatique et sécurisée auprès d'un point d'accès (de type WiFi par exemple) à un réseau de télécommunications.

Comme indiqué ci-avant, la fourniture du login et du mot de passe de l'utilisateur lors d'une authentification classique à un point d'accès présentent de nombreux inconvénients. Grâce à l'invention, l'authentification ne fait plus appel à ce type de données personnelles. L'authentification repose uniquement sur l'utilisation d'un identifiant unique de la carte à microcircuit et de l'identifiant du point d'accès afin d'obtenir une variable d'authentification.

La variable d'authentification de l'invention permet de limiter sensiblement les risques de fraudes volontaires (partage non autorisé d'un compte client) et involontaires (vol du login et mot de passe) liés à l'accès à un réseau de télécommunications.

De plus, grâce à cette invention, l'impact sur le terminal est minime et ainsi une majorité de terminaux déjà déployés et ayant la fonction WiFi pourrait s'authentifier de cette manière aux réseaux WiFi.

Un opérateur peut ainsi contrôler, à l'aide des variables d'authentification de l'invention, l'authentification et donc l'accès des usagers auprès de son réseau de télécommunications. En particulier, l'opérateur peut ajuster les conditions de validité d'une variable d'authentification, en termes de durée ou du nombre de bénéficiaires par exemple.

L'opérateur peut ainsi décider d'activer une variable d'authentification pour une pluralité d'authentifications (variable d'authentification à usage multiple) ou à usage unique (la variable est désactivée après la première demande d'authentification basée sur cette variable).

Selon un mode de réalisation particulier, l'identifiant du point d'accès au premier réseau de télécommunications est reçu via une première liaison de communication, la première liaison de communication étant indépendante (ou distincte) de la liaison de communication, dite seconde liaison de communication, via laquelle est reçue la variable d'authentification en provenance du serveur d'authentification.

Dans une variante particulière, la deuxième étape de commande est configurée pour commander au terminal l'envoi de la requête d'authentification à destination du point d'accès via la première liaison de communication.

Dans un mode de réalisation préféré, la variable d'authentification reçue lors de l'étape de réception est contenue dans un lien http.

Le terminal peut par la suite utiliser ce lien http pour s'authentifier auprès du point d'accès au réseau de télécommunications. Ce lien http étant dépourvu du login et mot de passe du client, les risques liés à l'authentification sont limités.

Selon une première variante, la liste comprend en outre une adresse de serveur associée à chaque identifiant de point d'accès,
le procédé comprenant en outre la détermination, à partir de la liste, de l'adresse du serveur d'authentification,
dans lequel, lors de la première étape de commande, le microcircuit commande au terminal d'insérer l'adresse du serveur d'authentification dans lesdites informations à envoyer.

L'adresse du serveur correspond par exemple à un numéro de téléphone.

Selon une deuxième variante, la liste comprend en outre un lien http associé à chaque identifiant de point d'accès,
le procédé comprenant en outre la détermination, à partir de la liste, du lien http associé à l'identifiant du point d'accès,
dans lequel, les informations à envoyer par le terminal en réponse à la première étape de commande correspondent à une requête http d'ouverture dudit lien http.

Dans un mode de réalisation particulier, le premier réseau de télécommunications est de type WLAN et la liaison de communication est une liaison de communication sécurisée d'un réseau de téléphonie mobile.

Dans un mode de réalisation particulier, le premier procédé comprend en outre la création ou la mise à jour de ladite liste à partir de données relatives audit point d'accès reçues en provenance du serveur d'authentification.

Dans un mode de réalisation particulier, le premier procédé comprend en outre :
- uniquement en cas de succès de ladite recherche, l'envoi, au terminal, d'une requête de localisation du terminal,
- la réception, en provenance du terminal, de premières informations de localisation relatives au terminal,
- la consultation de la liste pour déterminer, à partir de l'identifiant du point d'accès, des deuxièmes informations de localisation relatives au point d'accès, et
- la décision de bloquer ou non l'envoi de la requête d'authentification en fonction des premières et deuxièmes informations de localisation.

Dans un mode de réalisation particulier, l'envoi de la requête d'authentification est bloqué lorsque la distance entre le terminal et le point d'accès (cette distance étant calculée à partir des premières et deuxièmes informations de localisation) est supérieure ou égale à une distance prédéterminée.

L'invention permet ainsi avantageusement l'authentification et la connexion d'un terminal auprès d'un point d'accès (WiFi par exemple) d'un réseau de télécommunication en fonction de la position du terminal par rapport à celle du point d'accès, et plus particulièrement, en fonction de la distance séparant le terminal et le point d'accès considéré.

Sans le mécanisme de localisation de l'invention, le terminal tenterait systématiquement de se connecter au point d'accès présentant le signal radio le plus puissant, sans assurance aucune que ce point d'accès appartienne à l'opérateur auprès duquel l'utilisateur a effectivement souscrit. Dans l'approche conventionnelle, il existe un risque important que le terminal se connecte au point d'accès offrant la plus forte puissance d'émission radio mais auprès duquel l'utilisateur n'est pas autorisé à s'authentifier et à se connecter.

Grâce à l'invention, le terminal tentera uniquement de se connecter au point d'accès s'il se trouve à une distance raisonnable. Lorsque plusieurs points d'accès sont détectés, le terminal tentera avantageusement de se connecter au point d'accès le plus proche du terminal.

Le mécanisme de localisation de l'invention ne requiert aucune intervention de la part de l'utilisateur. C'est le programme contenu dans la carte à microcircuit de l'utilisateur qui récupère les données de localisation et décide si l'authentification est possible et, si oui, auprès de quel point d'accès cette authentification doit être réalisée.

Dans un mode particulier de réalisation, les différentes étapes du premier procédé d'authentification de l'invention sont déterminées par des instructions de programmes d'ordinateurs.

En conséquence, l'invention vise aussi un programme d'ordinateur sur un support d'informations, ce programme étant susceptible d'être mis en oeuvre dans un dispositif tel qu'une carte à microcircuit, ou plus généralement dans un ordinateur, ce programme comportant des instructions adaptées à la mise en oeuvre des étapes d'un procédé d'authentification tel que décrit ci-dessus.

L'invention vise aussi un support d'enregistrement (ou support d'informations) lisible par un microcircuit, et comportant des instructions d'un programme d'ordinateur tel que mentionné ci-dessus.

Corrélativement, l'invention concerne un deuxième procédé d'authentification d'un terminal auprès d'un réseau de télécommunications, le procédé étant mis en oeuvre par un point d'accès au réseau de télécommunications, le procédé comprenant :
- la réception d'une requête d'authentification provenant du terminal, la requête comprenant un jeton d'authentification ;
- une étape pour vérifier si le jeton d'authentification a au préalable été reçue en provenance d'un serveur d'authentification distant ; et
- uniquement dans l'affirmative, l'authentification du terminal.

Dans un mode de réalisation particulier, le deuxième procédé d'authentification comprend au préalable :
- la réception d'une première requête initiale provenant du terminal, la première requête initiale comprenant une adresse du serveur d'authentification et un identifiant unique d'un usager du terminal, et
- l'envoi d'une deuxième requête initiale au serveur d'authentification, la deuxième requête initiale contenant les données de la première requête initiale et l'identifiant du point d'accès.

Dans ce mode de réalisation, la requête initiale de fourniture d'un jeton d'authentification auprès du serveur d'authentification se fait par l'intermédiaire du point d'accès au réseau de télécommunications.

Dans un mode de réalisation préféré, le jeton d'authentification est reçu dans un lien http compris dans la requête d'authentification.

Selon un mode particulier de réalisation, la requête d'authentification reçue comprend en outre un identifiant d'un microcircuit, l'authentification n'étant réalisée que si l'identifiant de la carte à microcircuit a au préalable été reçu en provenance du serveur d'authentification en association avec le jeton d'authentification.

L'opérateur du réseau concerné peut ainsi décider de lier une variable d'authentification donnée à un identifiant de carte à microcircuit donné de sorte que seul le terminal équipé de la carte en question sera capable, à partir de la variable concernée, de s'authentifier auprès d'un point d'accès donné.

Dans un mode de réalisation particulier, l'authentification du terminal est refusée si la requête d'authentification est reçue dans un délai supérieur à un délai prédéterminé à compter de la réception du jeton d'authentification en provenance du serveur d'authentification.

Dans un mode particulier de réalisation, les différentes étapes du deuxième procédé d'authentification de l'invention sont déterminées par des instructions de programmes d'ordinateurs.

En conséquence, l'invention vise aussi un programme d'ordinateur sur un support d'informations, ce programme étant susceptible d'être mis en oeuvre dans un dispositif tel qu'un point d'accès à un réseau de télécommunications sans fil, ou plus généralement dans un ordinateur, ce programme comportant des instructions adaptées à la mise en oeuvre des étapes d'un procédé d'authentification tel que décrit ci-dessus.

L'invention vise aussi un support d'enregistrement (ou support d'informations) lisible par un ordinateur, et comportant des instructions d'un programme d'ordinateur tel que mentionné ci-dessus.

L'invention concerne également un troisième procédé d'authentification d'un terminal auprès d'un réseau de télécommunications, le procédé étant mis en oeuvre par un serveur d'authentification, le procédé comprenant :
- la réception d'un identifiant d'un point d'accès à un réseau de télécommunications en association avec un identifiant d'un microcircuit pouvant coopérer avec le terminal ;
- la consultation d'une mémoire pour vérifier, à partir de l'identifiant du point d'accès et de l'identifiant du microcircuit, si le terminal est autorisé à s'authentifier auprès du point d'accès ; et
- uniquement dans l'affirmative :
   - un premier envoi, au point d'accès, d'un jeton d'authentification via une première liaison de communication, et
   - un deuxième envoi, au terminal, d'une variable d'authentification via une deuxième liaison de communication.

De manière préférée, lors du deuxième envoi, la variable d'authentification est envoyée dans un lien http.

Selon un mode de réalisation particulier, les première et deuxième liaisons de communication sont indépendantes (ou distinctes) l'une de l'autre.

Dans un mode de réalisation particulier, la deuxième liaison de communication appartient à un réseau de téléphonie mobile (de type GSM par exemple), la variable d'authentification étant envoyée conformément au protocole SMS.

Dans un mode de réalisation particulier, lors du premier envoi, le jeton d'authentification est envoyé en association avec l'identifiant du microcircuit.

Dans un mode particulier de réalisation, les différentes étapes du troisième procédé d'authentification de l'invention sont déterminées par des instructions de programmes d'ordinateurs.

En conséquence, l'invention vise aussi un programme d'ordinateur sur un support d'informations, ce programme étant susceptible d'être mis en oeuvre dans un dispositif tel qu'une serveur, ou plus généralement dans un ordinateur, ce programme comportant des instructions adaptées à la mise en oeuvre des étapes d'un procédé d'authentification tel que décrit ci-dessus.

L'invention vise aussi un support d'enregistrement (ou support d'informations) lisible par un ordinateur, et comportant des instructions d'un programme d'ordinateur tel que mentionné ci-dessus.

A noter que les programme mentionnés ci-avant peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également un microcircuit (une carte à microcircuit, par exemple), un point d'accès à un réseau de télécommunications et un serveur d'authentification comprenant des moyens adaptés à la réalisation des étapes des premier, deuxième et troisième procédés d'authentification de l'invention, respectivement.

L'invention concerne par ailleurs un système d'authentification pour authentifier un terminal auprès d'un point d'accès à un réseau de télécommunications (de type sans fil par exemple), le système comprenant un microcircuit conforme à l'invention, un point d'accès conforme à l'invention et un serveur d'authentification conforme à l'invention tels que mentionnés ci-avant, le microcircuit étant apte à coopérer avec le terminal.

Le système de l'invention peut en outre comprendre le terminal à authentifier auprès du point d'accès.

Les avantages et commentaires exposés ci-dessus en relation avec les procédés d'authentification de l'invention s'appliquent de la même manière aux dispositifs et au système de l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente, de manière schématique, un mécanisme d'authentification traditionnel ;
- la figure 2 représente, de manière schématique, une carte à microcircuit, un point d'accès et un serveur d'authentification conformes à un mode de réalisation particulier de l'invention ;
- la figure 3 représente, de manière schématique, l'architecture matérielle de la carte à microcircuit représentée en figure 2 ;
- les figures 4 et 5 représentent, sous forme d'organigrammes, les principales étapes d'un procédé d'authentification conforme respectivement à un premier et à un deuxième mode de réalisation de l'invention ;
- les figures 6A et 6B représentent une liste conforme respectivement au premier et deuxième mode de réalisation de l'invention ;
- les figures 7, 8, 9 et 10 représentent, sous forme d'organigrammes, des variantes aux premier et deuxième modes de réalisation de l'invention.

### Description détaillée de plusieurs modes de réalisation

La présente invention concerne l'authentification d'un terminal auprès d'un point d'accès d'un réseau de télécommunications sans fil, de type WiFi par exemple. L'invention permet l'authentification de terminaux équipés de cartes SIM, et plus généralement, des terminaux équipés d'un microcircuit.

Bien que les exemples de réalisation de l'invention décrits ci-après soient en lien avec une carte SIM (conforme au standard ISO 7816), on comprendra que l'invention peut s'appliquer pour tous types de microcircuit comportant (ou pouvant récupérer) l'identifiant unique d'un usager d'un réseau de télécommunications, de type sans fil par exemple. L'invention s'applique notamment aux terminaux munis d'une carte à microcircuit, telle qu'une carte micro SD par exemple. L'invention s'applique également à un microcircuit sécurisé et intégré au terminal.

De plus, dans ce document, les exemples de réalisation de l'invention sont décrits dans le cadre de l'authentification d'un terminal auprès d'un point d'accès à un réseau WLAN (pour *Wireless Local Area Networken* anglais), de type WIFI. On comprendra cependant que l'invention ne s'applique pas exclusivement à la technologie WLAN mais permet plus généralement l'authentification d'un terminal auprès d'un point d'accès à un quelconque réseau de télécommunications, par exemple de type sans fil, tel que *bluetooth* ou *sibee* par exemple.

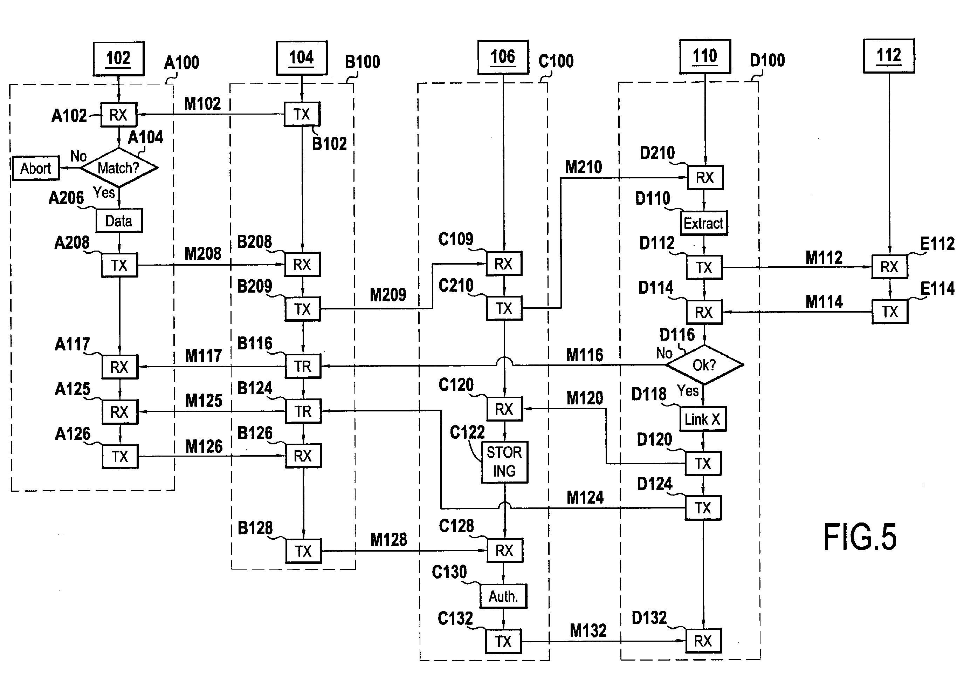

Des exemples de mise en oeuvre de l'invention sont à présent décrits en référence aux **figures 2-10**.

Comme représenté en **figure 2**, un terminal mobile 104 équipé d'une carte SIM 102 est configuré pour pouvoir coopérer, via une liaison de communication 114, avec un point d'accès WiFi 106 à un réseau de télécommunications 108 (de type Internet par exemple). Pour accéder au réseau de télécommunications 108, le terminal 104 doit s'authentifier auprès du point d'accès 106 via la liaison de communication 114.

Comme décrit plus en détails ultérieurement, une telle authentification fait intervenir un serveur d'authentification 110 capable de communiquer avec le terminal 104 et le point d'accès 106 via respectivement les liaisons de communication 116 et 115.

Les liaisons de communication 114, 115 et 116 sont indépendantes les unes des autres. En particulier, la liaison de communication 116 ne passe pas par le point d'accès 106 et ne comprend donc pas la liaison de communication 114.

A titre d'exemple non limitatif, la liaison 116 peut être une liaison de communication sur un réseau de téléphonie mobile RS conforme à l'une quelconque des normes technologiques (3G, 4G etc..). L'homme du métier saura choisir la liaison sécurisée en fonction des besoins, notamment en termes de couvertures et de bande passante.

La liaison de communication 116 est de préférence une liaison de communication sécurisée, c'est-à-dire mettant en oeuvre un mécanisme d'authentification permettant de sécuriser l'échange des données dans le réseau RS. La liaison sécurisée signifie par exemple que l'utilisateur est initialement authentifié au réseau de communication RS par un mécanisme d'authentification à base de clés et d'algorithmes cryptographiques. Dans le mode de réalisation décrit ici, le terminal 104 équipé du microcircuit 102 s'est au préalable authentifié auprès du réseau de téléphonie mobile RS à l'aide d'un identifiant unique attribué à l'usager, cet identifiant étant mémorisé dans le microcircuit 102 lui-même (dans la mémoire 208, par exemple).

Bien entendu, l'homme du métier saura mettre en oeuvre d'autres mécanismes de cryptographie pour assurer par exemple la confidentialité et l'intégrité des données transmises sur la liaison sécurisée.

De même, la liaison de communication 115 est de préférence sécurisée, ce qui signifie qu'un mécanisme d'authentification entre serveurs contrôle l'échange de données entre le point d'accès 106 et le serveur d'authentification 110.

Le serveur d'authentification 110 est en outre capable de consulter une mémoire 112 (telle qu'une base de données, de type HSS pour *« Home Subscriber server»* en anglais, par exemple) dans laquelle des données client peuvent être enregistrées.

La **figure 3** représente, de manière schématique, l'architecture matérielle de la carte SIM 102 dans cet exemple de mise en oeuvre de l'invention. La carte SIM 102 est conforme à la norme ISO 7816.

Plus particulièrement, la carte SIM 102 comprend un microcircuit comportant un microprocesseur 202, une mémoire morte (de type ROM) 204, une mémoire volatile réinscriptible (de type RAM) 206, une mémoire non volatile réinscriptible 208 (de type EEPROM ou Flash NAND par exemple) et une interface d'entrées et sorties 210, cette dernière étant adaptée pour coopérer avec un connecteur du terminal 104 afin de permettre l'échange de signaux entre la carte SIM 102 et le terminal 104.

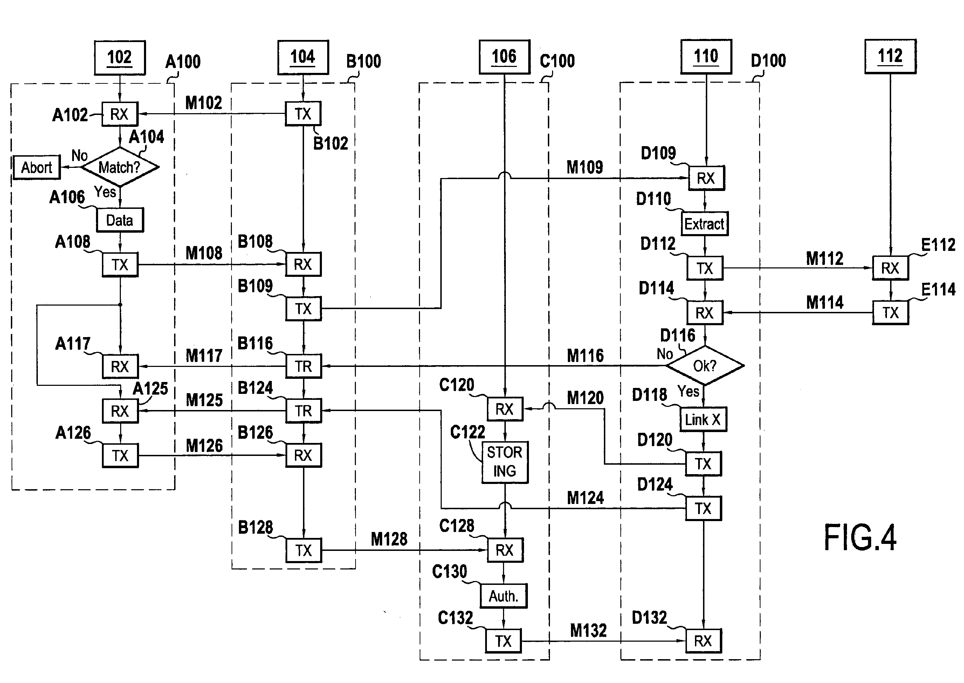

Dans cet exemple, la mémoire morte 204 constitue un support d'informations (ou d'enregistrement) conforme à l'invention. Elle comprend un programme d'ordinateur P1 permettant à la carte SIM 102 de mettre en oeuvre un procédé d'authentification A100 conforme à un mode de réalisation particulier de l'invention (cf. figure 4).

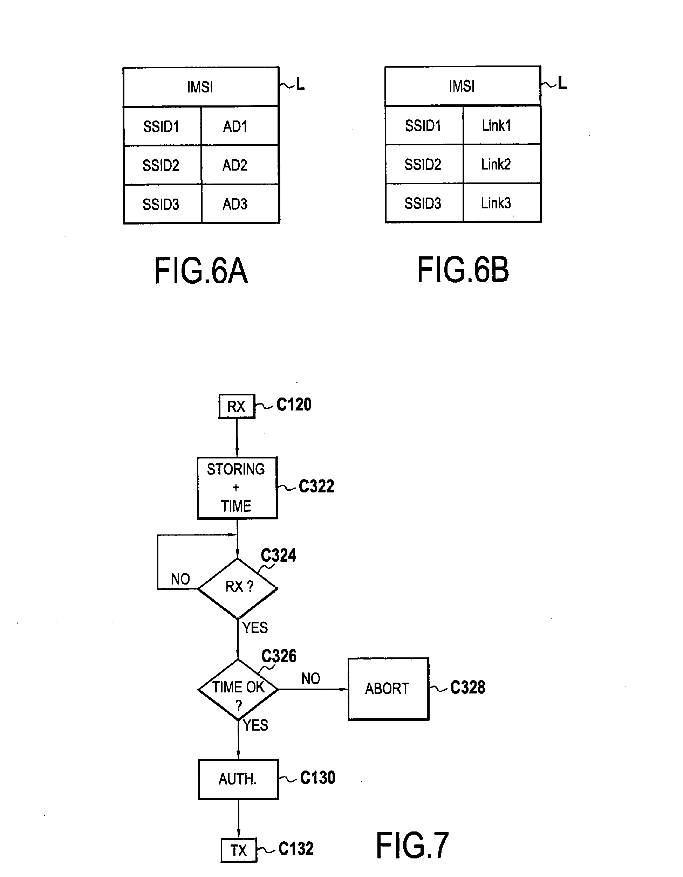

Une liste L est en outre stockée dans une mémoire de la carte SIM 102, i.e. dans la mémoire non-volatile réinscriptible 208 dans le cas présent. Cette liste L comprend notamment un identifiant de la carte SIM 102, cet identifiant correspondant à l'IMSI (pour *« International Mobile Subscriber Identity »*) dans le cas présent. Le contenu et l'utilisation de la liste L seront décrits plus en détails ultérieurement en référence aux figures 6A et 6B.

Le point d'accès 106 et le serveur d'authentification 110 comprennent des composants analogues à ceux énumérés en référence à la figure 3. En particulier, le point d'accès 106 (respectivement le serveur 110) comprend une mémoire (de type ROM par exemple) dans laquelle est stocké un programme d'ordinateur P2 (respectivement P3) permettant au point d'accès 106 (respectivement au serveur d'authentification 110) de mettre en oeuvre un procédé d'authentification C100 (respectivement D100) conforme à un mode de réalisation particulier de l'invention. A ce titre, les mémoires du point d'accès 106 et du serveur d'authentification 110 contenant respectivement les programmes P2 et P3 constituent des supports d'informations conformes à l'invention.

Un premier mode de réalisation de l'invention est à présent décrit en référence aux **figures 2, 3****,** **4** **et** **6A**. Plus précisément, la carte SIM 102 met en oeuvre le procédé d'authentification A100 de l'invention en exécutant le programme P1. De même, le point d'accès 106 et le serveur d'authentification 110 mettent en oeuvre les procédés d'authentification C100 et D100 conformes à l'invention en exécutant respectivement les programmes P2 et P3.

On envisage ici le cas où le porteur du terminal 104 s'approche à proximité du point d'accès 106. Il peut s'agir par exemple de l'utilisateur d'un Smartphone rentrant dans la zone d'action d'un point WiFi (dans un lieu public tel qu'une gare, par exemple).

Comme représenté en figure 6A, la liste L comprend dans ce premier exemple un identifiant IMSI de la carte SIM 102 ainsi que 3 identifiants de point d'accès SSID1, SSID2 et SSID3 associés respectivement aux adresses AD1, AD2 et AD3.

Le point d'accès 106 envoie périodiquement et de façon spontanée un message d'identification dans son voisinage afin d'informer les terminaux environnants de sa présence. Alternativement, l'envoi de tels messages peut être sollicité par un terminal voisin (dans ce cas, l'envoi du message d'identification se fait en réponse à une requête envoyée par le terminal voisin). Ce message d'identification comprend un identifiant (noté SSID1), de type SSID par exemple, du point d'accès 106.

Après réception de l'identifiant SSID1, le terminal 104 transmet celui-ci à la carte SIM 102 dans un message M102 (étape B102).

La carte SIM 102 extrait l'identifiant SSID1 contenu dans le message M102 reçu en provenance du terminal 104 (étape A104). La carte SIM 102 vérifie ensuite, à partir de l'identifiant SSID1 obtenu, si l'utilisateur est autorisé à s'authentifier auprès du point d'accès 106. Typiquement, la carte SIM 102 vérifie si le point d'accès 104 détecté appartient à un opérateur auquel a souscrit l'utilisateur du terminal 104. Pour ce faire, la carte SIM consulte la liste L contenue dans la mémoire non-volatile réinscriptible 208 (étape A104).

Lors de cette consultation, la carte SIM 102 détermine, à partir de l'identifiant SSID extrait du message M102, si le terminal peut s'authentifier auprès du point d'accès 106. Dans l'exemple décrit ici, la carte SIM 102 recherche dans la liste L l'identifiant SSID1 du point d'accès 106 (étape A104).

Si la carte SIM 102 ne détecte pas la présence de l'identifiant SSID1 dans la liste L, le procédé d'authentification de l'invention est abandonné. Si en revanche l'identifiant SSID1 est détecté lors de l'étape A104 (comme c'est le cas dans cet exemple), la carte SIM 102 procède à l'étape A106.

Dans ce premier mode de réalisation, la carte SIM 102 récupère l'adresse AD1 associée à l'identifiant SSID1 dans la liste L contenue dans la mémoire 208 (A106). La carte 102 envoie ensuite un message M108 au terminal 104, ce message comprenant l'identifiant IMSI, l'identifiant SSID1 et l'adresse AD1 extraits de la liste L (étape A108). Ce message M108 est une commande envoyée au terminal 104 afin que ce dernier envoie, à l'adresse AD1, l'identifiant SSID1 et l'identifiant IMSI.

En réponse au message M108 reçu (étape B108), le terminal 104 envoie un message M109 à l'adresse AD1, cette addresse correspondant au serveur d'authentification 110 (étape B109). Ce message M109 comprend l'identifiant SSID1 et l'identifiant IMSI. Dans cet exemple, l'envoi du message M109 est réalisé via la liaison 116. L'envoi M109 ne fait donc pas intervenir les liaisons de communication 114 et 115.

Dans un mode préférée, cette liaison 116 appartient à un réseau de téléphonie mobile (la liaison 116 est de type GSM par exemple) et le message M109 est envoyé selon le protocole SMS. L'adresse AD1 correspond alors à un numéro de téléphone, par exemple. D'autres types de liaison et de protocole de communication sont cependant envisageables dans le cadre de l'invention comme, par exemple, SMS sur IMS (« *Internet Multimedia Subsystem »* en anglais), ou par le protocole de transport « *Global Plaform Amendment B* ».

Le serveur d'authentification 110 extrait ensuite, à partir du message M109 reçu, l'identifiant IMSI de la carte SIM 102 et l'identifiant SSID1 du point d'accès 106 (étape D110).

Le serveur d'authentification 110 est configuré pour vérifier, à partir des identifiants IMSI et SSID1, si l'usager associé à la carte SIM 102 est autorisé (ou non) à s'authentifier auprès du point d'accès 104. Typiquement, le serveur d'authentification 110 détermine si l'usager en question a effectué les souscriptions nécessaires auprès de l'opérateur concerné pour s'authentifier et accéder au réseau de télécommunications 108 via le point d'accès 106. Pour ce faire, le serveur d'authentification consulte une mémoire 112 pouvant contenir des données clients relatives à des points d'accès. Ces données client comprennent en particulier les droits d'accès de différents usagers à des points d'accès déterminés. La mémoire 112, correspondant à une base de données HSS dans cet exemple, peut être agencée dans le serveur 110 ou être accessible à distance par le serveur 110.

Dans cet exemple, le serveur d'authentification 110 envoie une requête M112 à la mémoire 112 (étape D112). En retour, le serveur 110 reçoit un message M114 (étape D114) à partir duquel le serveur d'authentification 110 détermine si l'usager associé à la carte SIM 102 est autorisé à s'authentifier auprès du point d'accès 104 (étape D116).

Dans la négative, le serveur d'authentification envoie un message M116 au terminal 104 lui indiquant qu'aucune authentification n'est autorisée auprès du point d'accès 106 (étape D116). Le terminal informe la carte SIM 102 que la procédure d'authentification est abandonnée (étape B116).

Si, en revanche, le résultat de l'étape de détermination D116 est positif, le serveur d'authentification 110 génère (ou récupère) une variable dite d'authentification notée X (étape D118). Cette variable constitue, dans cet exemple, un jeton d'authentification destiné à permettre au terminal 102 de s'authentifier auprès du point d'accès 106. A noter que cette variable X ne contient en aucun cas le login et/ou le mot de passe permanents spécifiquement attribués à l'usager propriétaire de la carte SIM 102.

Cette variable X est de préférence unique. Autrement dit, cette variable est dédiée à l'authentification de la carte SIM 102.

Dans un mode préféré, la variable X est générée aléatoirement par le serveur d'authentification 110. Elle se présente par exemple sous une suite de caractères (chiffres, lettres, symboles quelconques...).

La variable d'authentification peut être générée à partir d'un algorithme de génération d'une donnée aléatoire tel qu'un algorithme DES ou, de façon plus générale, à partir d'un algorithme de diversification de données, par exemple, au moyen d'un compteur ou d'une donnée incrémentée pour chaque requête d'authentification (donnée d'horloge par exemple). La fonction de l'algorithme de génération de la variable X est de générer un jeton d'authentification dédié pour chaque session d'authentification.

Dans un mode de réalisation particulier, la variable X n'est valide que pour un temps prédéfini.

Le serveur d'authentification 110 envoie ensuite la variable X (correspondant dans cet exemple à un jeton d'authentification) au point d'accès 106 via la liaison de communication 115 (envoi du message M120 à l'étape D120). Cet envoi permet au point d'accès 106 d'avoir connaissance des variables d'authentification activées par le serveur d'authentification 110.

Le point d'accès 106 stocke alors la variable X dans une mémoire 113 qu'elle pourra ultérieurement consulter (étape C122). Cette mémoire 113 se présente par exemple sous la forme d'une base de données.

Le serveur d'authentification 110 envoie également le jeton d'authentification, c'est-à-dire la variable X, au terminal 104 via la liaison sécurisée 116 (envoi du message M124 à l'étape D124). A noter que cette liaison 116 ne passe pas par le point d'accès 106. En particulier, la liaison de communication 116 est distincte de la liaison de communication 114.

Dans le mode de réalisation considéré ici, la variable X contenue dans le message M124 se présente sous la forme d'un lien http (noté ici LinkX) et respecte par exemple le format suivant :

### http://X.html

L'homme du métier comprendra que d'autres formats ou types de liens sont envisageables dans le cadre de l'invention.

Dans un mode préféré, la liaison 116 est de type GSM et le message M124 est envoyé selon le protocole SMS. Toutefois, comme indiqué précédemment, d'autres types de liaison et de protocole de communication sont envisageables dans le cadre de l'invention.

Comme déjà indiqué précédemment, la liaison sécurisée 116 peut être une liaison de communication d'un autre type que GSM comme, par exemple, une liaison de communication sur un réseau de téléphonie mobile conforme à l'une quelconque des normes technologiques (3G, 4G etc..). L'homme du métier saura choisir la liaison sécurisée en fonction des besoins, notamment en termes de couvertures et bande passante.

A l'étape B124, le terminal 104 transmet à la carte SIM 102 la variable X provenant du serveur 110.

La carte SIM 102 commande ensuite au terminal de procéder à l'authentification auprès du point d'accès 106 au moyen de la variable X (étape A126). Pour ce faire, la carte SIM 102 envoie une commande M126 au terminal 104, cette commande comprenant le lien LinkX (et donc la variable d'authentification X). Cette commande M126 déclenche l'envoi, par le terminal 102, d'une requête d'authentification M128 auprès du point d'accès 106 via la liaison de communication 114, la requête comportant la variable d'authentification X (étape B128). Dans l'exemple considéré ici, la requête d'authentification M128 correspond à une requête d'ouverture du lien LinkX.

Dans un cas particulier, la commande M126 est identique à la requête d'authentification M128.

A noter que la requête d'authentification M128 ne contient en aucun cas les login et mot de passe permanents spécifiquement attribués à la carte SIM 102.

Le point d'accès 106 procède ensuite à l'authentification du terminal 104, à partir de la requête d'authentification M128 reçue (étape C130). Pour ce faire, le point d'accès 106 consulte sa mémoire 113 et détermine si la variable X a au préalable été reçue en provenance d'un serveur d'authentification. Dans cet exemple, le point d'accès 106 recherche la variable X dans la mémoire 113.

Lorsque le point d'accès 106 détecte que la variable d'authentification X est stockée dans la mémoire 113, il en déduit que le terminal 104 est autorisé à accéder au réseau de télécommunications sans fil 8 (authentification passée avec succès). Le point d'accès 106 établit alors une connexion avec le terminal 104.

Si au contraire la variable X n'est pas détectée dans la mémoire 113, le point d'accès 106 n'autorise pas l'accès du terminal 104 au réseau de télécommunications 108. Dans ce cas, un message de refus d'accès est éventuellement envoyé par le point d'accès 110 au terminal 104.

Dans cet exemple, quelle que soit l'issue de l'authentification C130, le point d'accès informe le serveur d'authentification 110 du résultat obtenu (envoi du message M132 à l'étape C132). Le message M132 ainsi envoyé comprend, par exemple, la variable X extraite de la requête d'authentification M128.

Dans une variante de l'invention, le terminal 104 ajoute un identifiant de terminal (son adresse MAC dans le cas présent) dans la requête d'authentification M128 à envoyer à l'étape B128. Lorsque l'authentification est passée avec succès à l'étape C130, le point d'accès 106 ajoute l'adresse MAC du terminal 104 dans le message M132 à envoyer à l'étape C132.

A partir de l'adresse MAC et de la variable X reçue, le serveur d'authentification peut déterminer l'identité du terminal à qui l'accès au réseau 108 a été accordé.

A noter que la liste L peut être créée et/ou mise à jour à partir de données relatives à des points d'accès (tels que 106) reçues en provenance du serveur d'authentification 110. Une telle mise à jour peut être faite de manière périodique ou spontanément à la demande de la carte SIM 102 via son terminal 104.

Dans une variante à ce premier mode de réalisation, une fois la variable d'authentification X générée (ou récupérée) à l'étape D118, le serveur d'authentification 110 utilise un algorithme ALG pour générer, à partir de la variable d'authentification X et d'une clé CL, un jeton d'authentification JT1. Cet algorithme ALG est un algorithme de cryptographie, de type DES par exemple. La clé CL est propre au microcircuit 102 et est connue (ou récupérable par) le serveur d'authentification 110.

Dans l'exemple envisagé ici, la clé CL est enregistrée dans une mémoire du serveur 110 en association avec l'identifiant IMSI du microcircuit 104 (dans une liste client par exemple).

Dans cette alternative, le serveur d'authentification 110 transmet le jeton d'authentification JT1 (et non la variable d'authentification X) au point d'accès 106 lors de l'étape D120. Autrement dit, dans cette alternative, c'est le jeton JT1 et non la variable d'authentification X qui constitue le jeton d'authentification transmis au point d'accès 106 via le message M120.

Lors de l'étape C122, le point d'accès 106 stocke ainsi le jeton d'authentification JT1 dans la mémoire 113.

En revanche, dans cette alternative, le serveur d'authentification 110 transmet également la variable d'authentification X au terminal 104 (étape d'envoi D124) comme décrit ci-avant en référence au premier mode de réalisation.

Toujours dans cette alternative, le microcircuit 102 exécute le même algorithme ALG afin de générer, à partir de la variable d'authentification X reçue à l'étape A125 et de la clé CL connue du microcircuit 102, le jeton d'authentification JT2. Dans cet exemple, la clé CL est au préalable mémorisée dans une mémoire accessible par le microcircuit 102 (dans la mémoire non volatile réinscriptible 208, par exemple).

Le microcircuit 102 commande ensuite au terminal 104 de procéder à l'authentification auprès du point d'accès 106 au moyen du jeton d'authentification JT2 ainsi généré (étape A126). Pour ce faire, le microcircuit 102 envoie la commande M126 au terminal 104, cette commande comprenant le jeton d'authentification JT2. Cette commande déclenche l'envoi, par le terminal 104, d'une requête d'authentification M128 auprès du point d'accès 106, la requête comportant le jeton d'authentification JT2 généré par le microcircuit 102 (B128). Cette requête d'authentification M128 correspond par exemple à une requête http d'ouverture de lien.

Cette alternative permet d'améliorer la sécurité du procédé d'authentification de l'invention en s'assurant que le jeton d'authentification JT2 présenté par le terminal 104 au point d'accès 106 à bien été généré par le microcircuit 102 de l'usager légitime. Le point d'accès 106 compare le jeton d'authentification JT2 provenant du terminal 102 avec le jeton JT1 fourni au préalable par le serveur d'authentification 110 (étape C130). L'authentification n'est autorisée que s'il y a correspondance entre ces deux jetons d'authentification JT1 et JT2.

Eventuellement, la fonction de cryptographie est protégée par une fonction d'authentification qui requière la saisie d'un code personnel également enregistré dans le microcircuit 102.

Alternativement, le point d'accès 106 reçoit la variable d'authentification X en association avec la clé CL au cours de l'étape C120. Le point d'accès 106 exécute ensuite l'algorithme inverse sur le jeton d'authentification JT2 reçu du terminal 104 pour déterminer si la requête d'authentification M128 est légitime. Pour exécuter cet algorithme inverse, le point d'accès 106 utilise en tant que paramètres d'entrée la variable d'authentification X ainsi que la clé CL propre au microcircuit 102.

Un deuxième mode de réalisation de l'invention est à présent décrit en référence aux **figures 2, 3****,** **5** **et** **6B**.

Dans ce cas, on suppose que la liste L comprend l'identifiant de la carte SIM 102 (l'IMSI dans cet exemple) ainsi que les identifiants de points d'accès SSID1, SSID2 et SSID3 associés respectivement aux liens http Link1, Link2 et Link3.

Ce deuxième mode de réalisation diffère uniquement du premier mode ci-dessus dans la manière dont la demande de variable d'authentification X est envoyée depuis la carte SIM 102 jusqu'au serveur d'authentification 110 (entre les étapes A106 et D109 du mode de réalisation de la figure 4).

Plus précisément, si l'identifiant SSID1 du point d'accès 106 est détecté lors de l'étape A104 (comme c'est le cas dans cet exemple), la carte SIM 102 procède à l'étape A206.

Dans ce deuxième mode, la carte SIM 102 récupère le lien http Link1 associé à l'identifiant SSID1 dans la liste L contenue dans la mémoire 208. La carte SIM 102 envoie ensuite un message M208 au terminal 104, ce message comprenant l'identifiant IMSI et le lien Link1 extraits de la liste L. Ce message M208 est typiquement une commande APDU envoyée au terminal 104 afin que ce dernier envoie l'identifiant IMSI et une requête http d'ouverture du lien Link1 auprès du point d'accès 106 (étape B209).

Une fois la requête http M209 reçue, le point d'accès 106 reconnaît le format du lien Link1 et récupère l'identifiant IMSI envoyé par le terminal 104. Il envoie ensuite au serveur d'authentification 110 un message M210 comprenant son identifiant de point d'accès SSID1 ainsi que l'identifiant IMSI.

Le serveur d'authentification 110 extrait les identifiants SSID1 et IMSI du message M210 reçu de la même manière que lors de l'étape D110 précédemment décrite en référence à la figure 4.

Une première variante aux premier et deuxième modes de réalisation décrits ci-avant est à présent décrite en référence à la **figure 7**.

Dans cette première variante, le point d'accès reçoit (étape C120) le message M120 comportant la variable d'authentification X en provenance du serveur d'authentification 110 de la même manière que dans les modes de réalisation précédents.

Dans cette variante, la variable X n'est valide que pour un temps déterminé.

Dès réception de la variable X, le point d'accès 106 déclenche un compteur de temps. Le point d'accès 106 extrait en outre la variable X et la mémorise dans la mémoire 113 (étape C322).

Au cours de l'étape C324, le point d'accès 106 détermine si une requête d'authentification M128 comportant la variable d'authentification X est reçue en provenance d'un terminal. Lorsqu'une telle requête d'authentification est reçue, le point d'accès 106 détermine le temps écoulé Te entre la réception C120 du message M120 comportant la variable X, d'une part, et la réception de la requête d'authentification en question, d'autre part (étape C326).

Si le temps écoulé Te est supérieur à un délai prédéterminé Tx de validité de la variable d'authentification X, l'authentification est annulée (C328) et un message d'abandon est éventuellement envoyé au terminal 104.

Si en revanche le temps écoulé Te est inférieur au délai prédéterminé Tx, le point d'accès 106 procède à l'étape d'authentification C130 (et suivante) comme précédemment décrite en référence à la figure 4.

Le délai prédéterminé Tx peut être fourni au préalable au point d'accès 106 de sorte que ce dernier applique le même délai Tx à toutes les requêtes d'authentification reçues. Alternativement, le serveur d'authentification 110 ajoute dans le message M120 le délai Tx à appliquer pour la variable X associé. Dans ce cas, le point d'accès 106 extrait le délai Tx du message M120 et compare celui-ci au temps écoulé Te lors de l'étape C326.

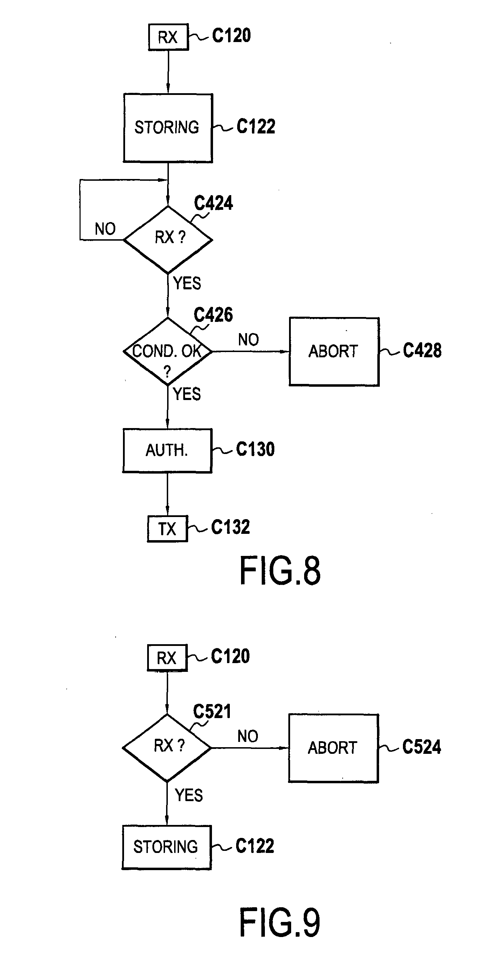

Une deuxième variante aux premier et deuxième modes de réalisation décrits ci-avant est à présent décrite en référence à la **figure 8**.

Dans cette variante, le point d'accès 106 reçoit le message M120 (étape C120) comportant la variable X puis stocke cette dernière dans la mémoire 113 (étape C122) comme décrit précédemment en référence à la figure 4.

Au cours de l'étape C424, le point d'accès 106 détermine si une requête d'authentification M128 comportant la variable d'authentification X est reçue en provenance d'un terminal. Lorsqu'une telle requête d'authentification est reçue, le point d'accès 106 détermine si au moins une condition prédéterminée COND n'est pas satisfaite. Si tel est le cas, l'authentification est annulée (C428) et un message d'abandon est éventuellement envoyé au terminal 104.

Si en revanche toutes les conditions COND sont satisfaites, le point d'accès 106 procède aux étapes C130 et suivante comme précédemment décrites en référence à la figure 4.

Une condition COND peut par exemple consister à vérifier si une requête d'authentification M128 comportant la même variable X a au préalable été reçue (éventuellement dans un délai prédéfini) par le point d'accès 106. Si tel est le cas, la variable X n'est plus valide et ne peut être utilisée pour une nouvelle requête d'authentification. De cette façon, une seule carte à microcircuit peut demander, via son terminal, l'authentification auprès du point d'accès 106 sur la base d'une variable d'authentification déterminée X.

La condition COND peut également comprendre un nombre d'authentifications possibles sur la base de la variable X. Une fois un nombre d'authentification seuil atteint au niveau du point d'accès 106, ce dernier refuse toute authentification ultérieure sur la base de cette variable.

Une troisième variante est à présent décrite en référence à la **figure 9**.

Dans cette variante, le point d'accès 106 reçoit le message M120 provenant du serveur d'authentification 110 (étape C120).

Cependant, dans cette variante, le point d'accès 106 détermine si le message M120 comportant une variable d'authentification provient effectivement d'un serveur d'authentification (étape C521). Si tel est le cas, le point d'accès procède normalement à l'étape C122 et suivantes. Dans le cas contraire l'authentification est annulée (C524) et un message d'abandon est éventuellement envoyé au terminal 104.

De cette manière, seules les variables d'authentification provenant d'un serveur d'authentification tel que le serveur 110 sont pris en compte par le point d'accès 106 pour authentifier des terminaux cherchant à accéder au réseau 108.

La détermination C521 est par exemple réalisée en comparant un identifiant de serveur d'authentification inséré dans le message M120 par le serveur d'authentification 110 avec une liste d'identifiant de serveurs autorisés. Une telle détermination est également possible l'aide d'un code ou cryptage permettant d'identifier la source du message M120 comme étant un serveur d'authentification autorisé.

Selon une quatrième variante, le serveur d'authentification 110 ajoute en outre, dans le message M120 à envoyer à l'étape D120, l'identifiant IMSI de la carte SIM 102 en association avec la variable d'authentification X. Lors de l'étape C122, le point d'accès 106 stocke la variable X en association avec l'identifiant IMSI dans la mémoire 113.

Dans cette variante, la commande M126 et la requête d'authentification M128 comprennent l'identifiant IMSI de la carte SIM 102 en association avec la variable X générée par le serveur d'authentification 110. Une fois la requête M128 reçue à l'étape C128, le point d'accès 106 détermine à l'étape C130 si la mémoire 113 contient la variable X en association avec l'identifiant IMSI de la carte SIM 102. L'authentification C130 n'est passée avec succès que si le couple [X, IMSI] est détecté dans la mémoire 113.

De cette manière, seul un terminal muni de la carte SIM 102 est capable de s'authentifier avec succès auprès du point d'accès 106 à l'aide de la variable d'authentification X.

Selon une cinquième variante, le microcircuit 102 ne se présente pas sous la forme d'une carte amovible mais est au contraire intégré directement au terminal 104 lui-même. Le microcircuit 102 peut, par exemple, être intégré dans la carte à circuits imprimés du terminal 104. Une même carte à circuits imprimés peut ainsi comporter le microcircuit 102 et d'autres composants du terminal 104 (microprocesseur, mémoires...).

Dans cette variante, le microcircuit 102 peut ainsi être sécurisé, c'est-à-dire que les fonctions réalisées par ce microcircuit peuvent être protégées par un mécanisme de protection tels que l'un au moins des mécanismes suivants :
- les fonctions sont débloquées par authentification à l'aide d'un code personnel (PIN) ;
- les données peuvent être également protégées (cryptées) dans les mémoires du microcircuit au moyen d'algorithmes de cryptographie respectant la norme FIPS par exemple ;
- le microcircuit 102 hébergent les applications et les données, celles-ci pouvant être protégées matériellement vis-à-vis d'attaques dites non-invasives (attaques par analyses de temps, analyse de consommation, analyse électromagnétique) mais aussi vis-à-vis d'attaque dites invasives (attaque d'horloge par exemple) ou semi-invasives.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

L'invention est avantageuse en ce qu'elle permet à un terminal équipé d'un microcircuit (sous la forme d'une carte à microcircuit par exemple) de s'authentifier de façon sécurisée et transparente pour l'utilisateur auprès d'un point d'accès (de type WiFi par exemple) à un réseau de télécommunications.

Comme indiqué ci-avant, la fourniture du login et du mot de passe de l'utilisateur à un point d'accès présentent de nombreux inconvénients. Grâce à l'invention, l'authentification ne fait plus appel à ce type de données personnelles. L'authentification repose uniquement sur l'utilisation d'un identifiant unique de la carte à microcircuit et de l'identifiant du point d'accès afin d'obtenir une variable d'authentification.

La variable d'authentification de l'invention permet de limiter de manière significative les risques de fraudes volontaires (partage non autorisé d'un compte client) et involontaires (vol du login et mot de passe) liés à l'accès à un réseau de télécommunications.

Un opérateur peut ainsi contrôler, à l'aide des variables d'authentification de l'inventlon, l'authentification et donc l'accès des usagers auprès de son réseau de télécommunications. En particulier, l'opérateur peut fixer les conditions de validité d'une variable d'authentification, en termes de durée par exemple.

L'opérateur peut également décider d'activer une variable d'authentification pour une pluralité d'authentifications (variable d'authentification à usage multiple) ou pour un usage unique (la variable est désactivée après la première demande d'authentification basée sur cette variable).

De plus, l'opérateur peut décider de lier une variable d'authentification donnée à un identifiant de carte à microcircuit donné de sorte que seul le terminal équipé de la carte approprié sera capable, à partir de la variable considérée, de s'authentifier auprès d'un point d'accès donné.

De plus, l'invention est avantageuse en ce qu'elle a un impact limité sur le fonctionnement normal du terminal de l'usager. De cette manière, une majorité des terminaux déjà déployés à l'heure actuelle et disposant de la fonction WiFi par exemple peuvent s'authentifier auprès des réseaux WiFi de façon automatique et sécurisée.

Par ailleurs, la présente invention concerne également l'authentification et la connexion d'un terminal à un point d'accès d'un réseau de télécommunications en fonction de la distance séparant le terminal et le point d'accès considéré.

L'invention concerne en particulier la localisation d'un point d'accès (WiFi par exemple) à un réseau de télécommunications sans fil dans un terminal équipé d'une carte à microcircuit (telle qu'une carte SIM par exemple).

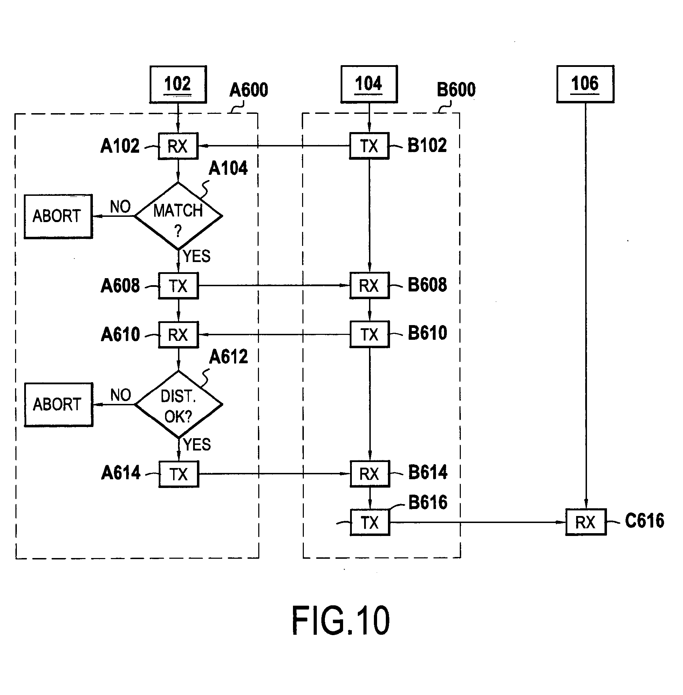

Un mode de réalisation particulier de l'invention est à présent décrit en référence notamment aux **figures 2** **et** **10**. Dans ce mode particulier, la carte SIM 102 et le terminal 104 mettent en oeuvre un procédé d'authentification A600 et B600 prenant en compte la position géographique du terminal 104 et du point d'accès 106.

Plus précisément, on considère le cas où le terminal 104 équipé de la carte SIM 102 détecte la présence à proximité du point d'accès 106 au réseau de télécommunications 108. Les étapes B102, A102 et A104 sont réalisées de la même manière que décrites précédemment en référence à la figure 4.

Ainsi, la carte SIM 102 extrait l'identifiant SSID1 contenu dans le message M102 provenant du terminal 104 (étape A104). La carte SIM 102 consulte ensuite la liste L afin de vérifier, à partir de l'identifiant SSID1 obtenu, si l'utilisateur est autorisé à s'authentifier auprès du point d'accès WiFi (étape A104).

Si la carte SIM 102 ne détecte pas la présence de l'identifiant SSID1 dans la liste L, le procédé d'authentification de l'invention est abandonné. Si en revanche l'identifiant SSID1 est détecté lors de l'étape A104 (comme c'est le cas dans cet exemple), la carte SIM 102 envoie une requête M608 d'informations de localisation au terminal 104 (étape A608).

En réponse à la requête M608, le terminal 104 envoie à la carte SIM 102 des informations de localisation INFT dans un message M610 (étape B610). Les informations INFT renseignent la carte SIM 102 sur la position géographique POST du terminal 104. Ces informations correspondent par exemple aux coordonnées géographiques actuelles du terminal 104.

Les informations de localisation INFT envoyées par le terminal 104 peuvent être obtenues de diverses manières et sont plus ou moins précises selon les moyens utilisés.

Le terminal 104 est par exemple équipé de moyens GPS lui permettant de déterminer ses coordonnées GPS à un instant donné.

Alternativement, le terminal 104 peut déterminer sa position POST par triangularisation à partir de la position géographique d'antennes GPS situées à proximité. Pour ce faire, le terminal doit être situé dans une zone couverte par un réseau GSM. La position du terminal 104 est évaluée en récupérant les identifiants des antennes GSM à laquelle le terminal s'est connecté. Le terminal calcule le temps écoulé entre l'émission et la réception d'une requête envoyée à chaque antenne GPS et en déduit ainsi sa position POST.

La carte SIM 102 détermine ensuite, à partir des informations de localisation INFT fournies par le terminal 104 et de l'identifiant SSID1 du point d'accès 106, si le terminal 102 doit tenter de se connecter au point d'accès 106 (étape A612).

Plus précisément, à l'étape A612, la carte SIM 102 détermine la position géographique POSP du point d'accès 106 en consultant une liste (la liste L par exemple) de la carte SIM 102 dans laquelle est mémorisée l'identifiant de point d'accès IDSS1 en association avec des informations de localisation INFP relatives au point d'accès 106. Les informations de localisation INFP peuvent correspondent à des coordonnées géographiques, de type GPS par exemple.

A partir des positions POSP et POST, la carte SIM 102 calcule la distance DIST séparant le terminal 104 du point d'accès 106 détecté (étape A612). La carte SIM 102 détermine ensuite si la distance DIST respecte un critère de distance prédéterminé.

Si la distance DIST est supérieure à une valeur seuil LIM prédéterminée, aucune authentification ou connexion n'est déclenchée par la carte SIM 102 auprès du point d'accès 106.

Si, en revanche, la distance DIST est inférieure ou égale à la valeur seuil LIM, la carte SIM 102 envoie (étape A614) une commande M614 au terminal 104 afin que ce dernier demande l'authentification et/ou l'accès auprès du point d'accès 106 au moyen d'une requête M616 (étape B616).

Dans le cas où plusieurs identifiants SSID de point d'accès sont détectés par le terminal 104 et transmis à la carte SIM 102 (B102), cette dernière effectue l'étape A104 pour chacun des identifiants SSID détecté. Si plusieurs points d'accès sont détectés comme se trouvant à une distance inférieure au critère LIM, la carte SIM 102 sélectionne le point d'accès le plus proche du terminal 104 à l'étape A612, et commande au terminal de procéder à l'authentification et/ou à la connexion auprès du point d'accès ainsi sélectionné (étape A614).

L'invention permet ainsi avantageusement d'authentifier et de connecter un terminal auprès d'un point d'accès (WiFi par exemple) d'un réseau de télécommunications en fonction de la position du terminal par rapport à celle du point d'accès, et plus particulièrement, en fonction de la distance séparant le terminal et le point d'accès considéré.

Sans le mécanisme de localisation de l'invention, le terminal tenterait systématiquement de se connecter au point d'accès présentant le signal radio le plus puissant, sans assurance aucune que ce point d'accès appartienne à l'opérateur auprès duquel l'utilisateur a effectivement souscrit. Dans l'approche conventionnelle, il existe un risque important que le terminal se connecte au point d'accès offrant la plus forte puissance d'émission radio mais auprès duquel l'utilisateur n'est pas autorisé à s'authentifier et à se connecter.

Grâce à l'invention, le terminal tentera uniquement de se connecter au point d'accès s'il se trouve à une distance raisonnable, réduisant ainsi considérablement les risques de se connecter à un point d'accès d'un opérateur étranger.

Lorsque plusieurs points d'accès sont détectés, le terminal tentera avantageusement de se connecter au point d'accès le plus proche du terminal, ce point d'accès appartenant en règle générale à l'opérateur de l'utilisateur.

Le mécanisme de localisation de l'invention ne requiert aucune intervention de la part de l'utilisateur. C'est le programme contenu dans la carte à microcircuit de l'utilisateur qui récupère les données de localisation et décide si l'authentification est possible et, si oui, auprès de quel point d'accès cette authentification doit être réalisée.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Procédé d'authentification d'un terminal (104) auprès d'un point d'accès à un premier réseau de télécommunications (108), ledit procédé étant mis en oeuvre par un microcircuit (102) comportant l'identifiant unique (IMSI) d'un usager d'un deuxième réseau de télécommunications, ledit microcircuit pouvant coopérer avec ledit terminal, le procédé étant **caractérisé par**:
- la réception de l'identifiant (SSID1) d'un point d'accès (106) au premier réseau de télécommunications (108) ;
- la recherche de l'identifiant du point d'accès dans une liste (L) d'identifiants de points d'accès mémorisée par le microcircuit ;
- en cas de succès de ladite recherche, une première étape de commande pour commander au terminal l'envoi d'informations (SSID1, IMSI ; Link1, IMSI) obtenues à partir de l'identifiant dudit point d'accès (SSID1) et de l'identifiant unique (IMSI) ;
- en réponse audit envoi, la réception, via une liaison de communication (116), d'une variable d'authentification en provenance d'un serveur d'authentification ; et
- une deuxième étape de commande (M126) pour commander au terminal l'envoi d'une requête d'authentification (M128) à destination dudit point d'accès, ladite requête d'authentification comprenant un jeton d'authentification obtenu par le microcircuit à partir de ladite variable d'authentification.

2. Procédé selon la revendication 1, dans lequel la variable d'authentification reçue lors de l'étape de réception est contenue dans un lien http.

3. Procédé selon la revendication 1 ou 2, ladite liste comprenant en outre une adresse de serveur (AD1, AD2, AD3) associée à chaque identifiant (SSID1, SSID2, SSID3) de point d'accès,
le procédé comprenant en outre la détermination, à partir de ladite liste (L), de l'adresse (AD1) dudit serveur d'authentification (SSID1) associée à l'identifiant dudit point d'accès (106),
dans lequel, lors de la première étape de commande, ledit microcircuit (102) commande au terminal (104) d'insérer l'adresse (AD1) du serveur d'authentification dans lesdites informations à envoyer.

4. Procédé selon la revendication 1 ou 2, dans lequel ladite liste (L) comprend en outre un lien http (Link1, Link2, Link3) associé à chaque identifiant (SSID1, SSID2, SSID3) de point d'accès,
le procédé comprenant en outre la détermination, à partir de ladite liste, du lien http (Link1) associé à l'identifiant (SSID1) dudit point d'accès (106),
dans lequel, les informations à envoyer par le terminal (104) en réponse à la première étape de commande correspondent à une requête http d'ouverture dudit lien http.

5. Procédé selon l'une quelconque des revendications 1 à 4, le premier réseau de télécommunications (108) étant de type WLAN et la liaison de communication (116) étant une liaison de communication sécurisée d'un réseau de téléphonie mobile.

6. Programme d'ordinateur (P1) comportant des instructions pour l'exécution des étapes d'un procédé d'authentification selon l'une quelconque des revendications 1 à 5 lorsque ledit programme est exécuté par un microcircuit.

7. Support d'enregistrement (204) lisible par un microcircuit sur lequel est enregistré un programme d'ordinateur (P1) comprenant des instructions pour l'exécution des étapes d'un procédé d'authentification selon l'une quelconque des revendications 1 à 5.

8. Procédé d'authentification d'un terminal (102) auprès d'un réseau de télécommunications (108), ledit procédé étant mis en oeuvre par un point d'accès (106) audit réseau, le procédé étant **caractérisé par**:
- la réception d'une première requête initiale (M209) provenant du terminal (104), ladite première requête initiale comprenant une adresse d'un serveur d'authentification (110) et un identifiant unique (IMSI) d'un usager dudit terminal, et
- l'envoi d'une deuxième requête initiale (M210) au serveur d'authentification, ladite deuxième requête initiale (M210) contenant les données de la première requête initiale et l'identifiant du point d'accès (106) ;
- la réception d'une requête d'authentification (M128) provenant dudit terminal, ladite requête comprenant un jeton d'authentification ;
- une étape pour vérifier si ledit jeton d'authentification a au préalable été reçue en provenance dudit serveur d'authentification distant (110) ; et
- uniquement dans l'affirmative, l'authentification du terminal.

9. Procédé selon la revendication 8, dans lequel le jeton d'authentification est reçu dans un lien http compris dans ladite requête d'authentification.

10. Procédé selon la revendication 8 ou 9, dans lequel la requête d'authentification reçue comprend en outre un identifiant d'un microcircuit, l'authentification n'étant réalisée que si ledit identifiant a au préalable été reçu en provenance dudit serveur d'authentification en association avec ledit jeton d'authentification.

11. Procédé selon l'une quelconque des revendications 8 à 10, dans lequel l'authentification dudit terminal est refusée si la requête d'authentification est reçue dans un délai supérieur à un délai prédéterminé à compter de ladite réception du jeton d'authentification en provenance dudit serveur d'authentification.

12. Programme d'ordinateur (P2) comportant des instructions pour l'exécution des étapes du procédé selon l'une quelconque des revendications 8 à 11 lorsque ledit programme est exécuté par un ordinateur.

13. Support d'enregistrement lisible par un ordinateur sur lequel est enregistré un programme d'ordinateur (P2) comprenant des instructions pour l'exécution des étapes du procédé selon l'une quelconque des revendications 8 à 11.

14. Procédé d'authentification d'un terminal (104) auprès d'un réseau de télécommunications (108), ledit procédé étant mis en oeuvre par un serveur d'authentification (110), le procédé étant **caractérisé par**:
- la réception d'un identifiant (SSID1) d'un point d'accès (106) à un réseau de télécommunications (108) en association avec un identifiant (IMSI) d'un microcircuit (102) pouvant coopérer avec ledit terminal ;
- la consultation d'une mémoire (112) pour vérifier, à partir de l'identifiant (SSID1) du point d'accès et de l'identifiant (IMSI) du microcircuit, si ledit terminal est autorisé à s'authentifier auprès du point d'accès ; et
- uniquement dans l'affirmative :
- un premier envoi, audit point d'accès, d'un jeton d'authentification via une première liaison de communication (115), et
- un deuxième envoi, audit terminal, d'une variable d'authentification via une deuxième liaison de communication (116).

15. Procédé selon la revendication 14, dans lequel, lors du deuxième envoi, ladite variable d'authentification est envoyée dans un lien http.

16. Procédé selon la revendication 14 ou 15, dans lequel la deuxième liaison de communication appartient à un réseau de téléphonie mobile, ladite variable d'authentification étant envoyée conformément au protocole SMS.

17. Procédé selon l'une quelconque des revendications 14 à 16, dans lequel, lors du premier envoi, ledit jeton d'authentification est envoyé en association avec l'identifiant du microcircuit.

18. Programme d'ordinateur (P3) comportant des instructions pour l'exécution des étapes d'un procédé selon l'une quelconque des revendications 14 à 17 lorsque ledit programme est exécuté par un ordinateur.

19. Support d'enregistrement lisible par un ordinateur sur lequel est enregistré un programme d'ordinateur (P3) comprenant des instructions pour l'exécution des étapes d'un procédé selon l'une quelconque des revendications 14 à 17.

## Patentansprüche

1. Verfahren zur Authentifizierung eines Endgerätes (104) bei einem Zugangspunkt zu einem ersten Telekommunikationsnetz (108), wobei das Verfahren durch einen Mikroschaltkreis (102), welcher die Benutzeridentifikation (IMSI) eines Teilnehmers eines zweiten Telekommunikationsnetzes umfasst, durchgeführt wird, wobei der Mikroschaltkreis mit dem Endgerät zusammenwirken kann, wobei das Verfahren **gekennzeichnet ist durch**:
- den Empfang der Kennung (SSID1) eines Zugangspunktes (106) zu dem ersten Telekommunikationsnetz (108);
- das Suchen der Kennung des Zugangspunktes in einer Liste (L) von Kennungen von Zugangspunkten, die **durch** den Mikroschaltkreis gespeichert ist;
- bei erfolgreicher Suche einen ersten Befehlsschritt, um dem Endgerät das Senden von anhand der Kennung des Zugangspunktes (SSID1) und der Benutzeridentifikation (IMSI) gewonnenen Informationen (SSID1, IMSI; Link1, IMSI) zu befehlen;
- als Reaktion auf das Senden, das Empfangen einer Authentifizierungsvariablen von einem Authentifizierungsserver über eine Kommunikationsverbindung (116); und
- einen zweiten Befehlsschritt (M126), um dem Endgerät das Senden einer Authentifizierungsanfrage (M128) an den Zugangspunkt zu befehlen, wobei die Authentifizierungsanfrage einen Authentifizierungstoken, welcher **durch** den Mikroschaltkreis anhand der Authentifizierungsvariablen erhalten wird, umfasst.

2. Verfahren nach Anspruch 1, wobei die bei dem Empfangsschritt empfangene Authentifizierungsvariable in einem http-Link enthalten ist.

3. Verfahren nach Anspruch 1 oder 2, wobei die Liste ferner eine jeder Zugangspunktkennung (SSID1, SSID2, SSID3) zugeordnete Serveradresse (AD1, AD2, AD3) umfasst,
wobei das Verfahren ferner das Bestimmen der Adresse (AD1) des Authentifizierungsservers (SSID1), welche der Kennung des Zugangspunktes (106) zugeordnet ist, anhand der Liste (L) umfasst,
wobei bei dem ersten Befehlsschritt der Mikroschaltkreis (102) dem Endgerät (104) befiehlt, die Adresse (AD1) des Authentifizierungsservers in die zu sendenden Informationen einzufügen.

4. Verfahren nach Anspruch 1 oder 2, wobei die Liste (L) ferner einen jeder Zugangspunktkennung (SSID1, SSID2, SSID3) zugeordneten http-Link (Link1, Link2, Link3) umfasst,
wobei das Verfahren ferner das Bestimmen des http-Links (Link1), welcher der Kennung (SSID1) des Zugangspunktes (106) zugeordnet ist, anhand der Liste umfasst,
wobei die durch das Endgerät (104) als Reaktion auf den ersten Befehlsschritt zu sendenden Informationen einem http-Request zum Öffnen des http-Links entsprechen.

5. Verfahren nach einem der Ansprüche 1 bis 4, wobei das erste Telekommunikationsnetz (108) vom Typ WLAN ist und die Kommunikationsverbindung (116) eine gesicherte Kommunikationsverbindung eines Mobilfunknetzes ist.

6. Computerprogramm (P1), umfassend Befehle für die Ausführung der Schritte eines Authentifizierungsverfahrens nach einem der Ansprüche 1 bis 5, wenn das Programm durch einen Mikroschaltkreis ausgeführt wird.

7. Durch einen Mikroschaltkreis lesbarer Speicherträger (204), auf dem ein Computerprogramm (P1) gespeichert ist, das Befehle für die Ausführung der Schritte eines Authentifizierungsverfahrens nach einem der Ansprüche 1 bis 5 umfasst.

8. Verfahren zur Authentifizierung eines Endgerätes (104) bei einem Telekommunikationsnetz (108), wobei das Verfahren durch einen Zugangspunkt (106) zu dem Netz durchgeführt wird, wobei das Verfahren **gekennzeichnet ist durch**:
- den Empfang einer ersten Ausgangsanfrage (M209) von dem Endgerät (104), wobei die erste Ausgangsanfrage eine Adresse eines Authentifizierungsservers (110) und eine Benutzeridentifikation (IMSI) eines Benutzers des Endgerätes umfasst, und
- das Senden einer zweiten Ausgangsanfrage (M21 0) an den Authentifizierungsserver, wobei die zweite Ausgangsanfrage (M21 0) die Daten der ersten Ausgangsanfrage und die Kennung des Zugangspunktes (106) umfasst;
- den Empfang einer Authentifizierungsanfrage (M128) von dem Endgerät, wobei die Anfrage einen Authentifizierungstoken umfasst;
- einen Schritt zur Überprüfung, ob der Authentifizierungstoken zuvor von dem entfernten Authentifizierungsserver (110) kommend empfangen worden ist; und
- lediglich wenn ja, die Authentifizierung des Endgerätes.

9. Verfahren nach Anspruch 8, wobei der Authentifizierungstoken in einem in der Authentifizierungsanfrage enthaltenen http-Link empfangen wird.

10. Verfahren nach Anspruch 8 oder 9, wobei die empfangene Authentifizierungsanfrage ferner eine Kennung eines Mikroschaltkreises umfasst, wobei die Authentifizierung nur dann vollzogen wird, wenn die Kennung zuvor von dem Authentifizierungsserver kommend in Verbindung mit dem Authentifizierungstoken empfangen worden ist.

11. Verfahren nach einem der Ansprüche 8 bis 10, wobei die Authentifizierung des Endgerätes abgelehnt wird, wenn die Authentifizierungsanfrage in einer Zeit empfangen wird, die über einer vorbestimmten Zeit von dem Empfang des Authentifizierungstokens von dem Authentifizierungsserver an liegt.

12. Computerprogramm (P2), umfassend Befehle für die Ausführung der Schritte des Verfahrens nach einem der Ansprüche 8 bis 11, wenn das Programm durch einen Computer ausgeführt wird.

13. Durch einen Computer lesbarer Speicherträger, auf dem ein Computerprogramm (P2) gespeichert ist, das Befehle für die Ausführung der Schritte des Verfahrens nach einem der Ansprüche 8 bis 11 umfasst.

14. Verfahren zur Authentifizierung eines Endgerätes (104) bei einem Telekommunikationsnetz (108), wobei das Verfahren durch einen Authentifizierungsserver (110) durchgeführt wird, wobei das Verfahren **gekennzeichnet ist durch**:
- den Empfang einer Kennung (SSID1) eines Zugangspunktes (106) zu einem Telekommunikationsnetz (108) in Verbindung mit einer Kennung (IMSI) eines Mikroschaltkreises (102), der mit dem Endgerät zusammenwirken kann;
- das Abfragen eines Speichers (112), um anhand der Kennung (SSID1) des Zugangspunktes und der Kennung (IMSI) des Mikroschaltkreises zu überprüfen, ob das Endgerät berechtigt ist, sich bei dem Zugangspunkt zu authentifizieren; und
- lediglich wenn ja:
- ein erstes Senden eines Authentifizierungstokens über eine erste Kommunikationsverbindung (115) an den Zugangspunkt und
- ein zweites Senden einer Authentifizierungsvariablen über eine zweite Kommunikationsverbindung (116) an das Endgerät.

15. Verfahren nach Anspruch 14, wobei bei dem zweiten Senden die Authentifizierungsvariable in einem http-Link gesendet wird.

16. Verfahren nach Anspruch 14 oder 15, wobei die zweite Kommunikationsverbindung zu einem Mobilfunknetz gehört, wobei die Authentifizierungsvariable entsprechend dem SMS-Protokoll gesendet wird.

17. Verfahren nach einem der Ansprüche 14 bis 16, wobei bei dem ersten Senden der Authentifizierungstoken in Verbindung mit der Kennung des Mikroschaltkreises gesendet wird.

18. Computerprogramm (P3), umfassend Befehle für die Ausführung der Schritte eines Verfahrens nach einem der Ansprüche 14 bis 17, wenn das Programm durch einen Computer ausgeführt wird.

19. Durch einen Computer lesbarer Speicherträger, auf dem ein Computerprogramm (P3) gespeichert ist, das Befehle für die Ausführung der Schritte eines Verfahrens nach einem der Ansprüche 14 bis 17 umfasst.

## Claims

1. A method of authenticating a terminal (104) with an access point to a first telecommunications network (108), said method being performed by a microcircuit (102) including a unique identifier (IMSI) of a user of a second telecommunications network, said microcircuit being capable of co-operating with said terminal, the method being **characterized by**:
· receiving the identifier (SSIDL) of an access point (106) to the first telecommunications network (108);
· searching for the identifier of the access point in a list (L) of access point identifiers stored by the microcircuit;
· in the event of said search being successful, a first control step for controlling the terminal to send information (SSID1, IMSI; Link1, IMSI) obtained from the identifier of said access point (SSIDL) and from the unique identifier (IMSI);
· in response to said sending of information, receiving via a communications link (116) an authentication variable coming from an authentication server; and
· a second control step (M126) for controlling the terminal to send an authentication request (M128) to said access point, said authentication request including an authentication token obtained by the microcircuit from said authentication variable.

2. A method according to claim 1, wherein the authentication variable received during the reception step is contained in an http link.

3. A method according to claim 1 or claim 2, said list further including a server address (AD1, AD2, AD3) associated with each access point identifier (SSID1, SSID2, SSID3), the method further including determining, from said list (L), the address (AD1) of said authentication server (SSID1) associated with the identifier of said access point (106), wherein, during the first control step, said microcircuit (102) causes the terminal (104) to insert the address (AD1) of the authentication server in said information for sending.

4. A method according to claim 1 or claim 2, wherein said list (L) further includes an http link (Link1, Link2, Link3) associated with each access point identifier (SSID1, SSID2, SSID3), the method further including determining, from said list, the http link (Link1) associated with the identifier (SSID1) of said access point (106), wherein the information for sending by the terminal (104) in response to the first control step corresponds to an http request to open said http link.

5. A method according to any one of claims 1 to 4, the first telecommunications network (108) being of the WLAN type and the communications link (116) being a secure communications link of a mobile telephone network.

6. A computer program (P1) including instructions for executing steps of an authentication method according to any one of claims 1 to 5 when said program is executed by a microcircuit.

7. A microcircuit-readable recording medium (204) having a recording of a computer program (P1) including instructions for executing steps of an authentication method according to any one of claims 1 to 5.

8. A method of authenticating a terminal (104) with a telecommunications network (108), said method being performed by an access point (106) to said network, the method being **characterized by**:
receiving a first initial request (M209) coming from the terminal (104), said first initial request including an address of an authentication server (110) and a unique identifier (IMSI) of a user of said terminal;
· sending a second initial request (M210) to the authentication server, said second initial request (M210) containing the data of the first initial request and the identifier of the access point (106);
· receiving an authentication request (M128) coming from said terminal, said request including an authentication token;
· a step of verifying that said authentication token has already been received from said remote authentication server (110); and
only in the event of the affirmative, authenticating the terminal.

9. A method according to claim 8, wherein the authentication token is received in an http link included in said authentication request.

10. A method according to claim 8 or claim 9, wherein the received authentication request further includes an identifier of a microcircuit, authentication being performed only if said identifier has already been received from said authentication server in association with said authentication token.

11. A method according to any one of claims 8 to 10, wherein authentication of said terminal is refused if the authentication request is received after a period of time longer than a predetermined period measured from receiving the authentication token from said authentication server.

12. A computer program (P2) including instructions for executing steps of the method according to any one of claims 8 to 11 when said program is executed by a computer.

13. A computer-readable recording medium having a recording of a computer program (P2) including instructions for executing steps of the method according to any one of claims 8 to 11.

14. A method of authenticating a terminal (104) with a telecommunications network (108), said method being performed by an authentication server (110), the method being **characterized by**:
· receiving an identifier (SSID1) of an access point (106) to a telecommunications network (108) in association with an identifier (IMSI) of a microcircuit (102) capable of co-operating with said terminal;
· consulting a memory (112) to verify, on the basis of the identifier (SSID1) of the access point and the identifier (IMSI) of the microcircuit, whether said terminal is authorized to be authenticated with the access point; and
· solely in the affirmative:
· firstly sending to said access point an authentication token via a first communications link (115); and
· secondly sending to said terminal an authentication variable via a second communications link (116).

15. A method according to claim 14, wherein, during the second sending, said authentication variable is sent in an http link.

16. A method according to claim 14 or claim 15, wherein the second communications link belongs to a mobile telephony network, and said authentication variable is sent in compliance with the SMS protocol.

17. A method according to any one of claims 14 to 16, wherein, during the first sending, said authentication token is sent in association with the identifier of the microcircuit.

18. A computer program (P3) including instructions for executing steps of the method according to any one of claims 14 to 17 when said program is executed by a computer.

19. A computer-readable recording medium having a recording of a computer program (P3) including instructions for executing steps of a method according to any one of claims 14 to 17.
